# EUROPEAN PATENT APPLICATION

(11) **EP 3 546 520 A1**
(43) Date of publication of application: **02.10.2019**
(21) Application number: 18196530.2
(22) Date of filing: 25.09.2018
(51) Int. Cl.: C08L 67/00, C08L 69/00, C08L 83/00

(54) **IMPACT MODIFIED POLYESTERCARBONATE-POLYSILOXANE COMPOSITION AND ASSOCIATED ARTICLE AND ADDITIVE MANUFACTURING METHOD**

(30) Priority: 28.03.2018 US 201862649044 P
(71) Applicant: SABIC Global Technologies B.V., 4612 PX Bergen op Zoom (NL)
(72) Inventor: GRIESHABER, Sarah, E., Selkirk, NY 12158 (US); BIHARI, Malvika, Mt. Vernon, IN 47620 (US); SYBERT, Paul Dean, Mt. Vernon, IN 47620 (US); LEUNG, Kelly, Evansville, IN 47712 (US)
(74) Representative: Lang, Johannes

(57) **Abstract**

A composition includes specific amounts of a block polycarbonate-polysiloxane, a core-shell impact modifier, and, optionally, a block polyestercarbonate. The core-shell impact modifier has a core that includes polydimethylsiloxane or poly(butyl acrylate) or both, and a shell includes a poly(methyl methacrylate). The block polyestercarbonate-polysiloxane and the block polyestercarbonate are present in a total amount of greater than 60 weight percent to 99 weight percent. And the block polyestercarbonate-polysiloxane contributes 0.3 to 0.7 weight percent of dimethylsiloxane units to the composition. Also described are an article comprising the composition, and a method of additive manufacturing utilizing the composition.

## Description

### BACKGROUND OF THE INVENTION

With additive manufacturing, three-dimensional parts can be fabricated using layer-by-layer deposition or "printing" of a thermoplastic material. The method utilizes a computer-controlled, moving extrusion head to form a series of layers, each layer being formed by extrusion of molten thermoplastic material onto the underlying layer. The thermoplastic material must have a combination of properties that allow it to be extruded in a molten form, to adhere to adjacent layers, and to provide impact strength to the printed part. In addition, for applications such as interior parts for aircraft and rail vehicles, the thermoplastic material must provide stringent flame retardant properties. It has been difficult for a single thermoplastic material to satisfy all of these requirements. There therefore remains a need for thermoplastic materials and methods that can be used for printing of three-dimensional parts and provide the printed parts with an improved balance of impact strength and flame retardancy.

### BRIEF SUMMARY OF EMBODIMENTS OF THE INVENTION

One embodiment is a composition comprising, based on the total weight of the composition: 20 to 98 weight percent of a block polyestercarbonate-polysiloxane comprising a polyester block comprising resorcinol ester units having the structure 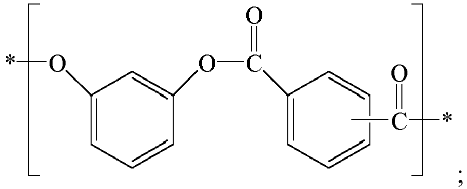 a polycarbonate block comprising carbonate units having the structure 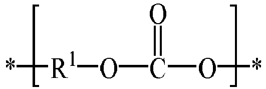 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 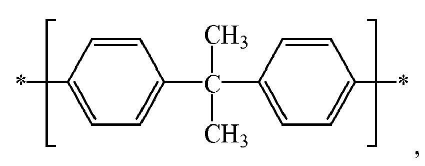 and further comprises, based on the weight of the block polyestercarbonate-polysiloxane, 0.2 to 4 weight percent dimethylsiloxane units; 1 to 8 weight percent of a core-shell impact modifier comprising a shell comprising poly(methyl methacrylate), and a core comprising polydimethylsiloxane, poly(butyl acrylate), or a combination thereof; and 0 to 79 weight percent of a block polyestercarbonate comprising a polyester block comprising resorcinol ester units having the structure 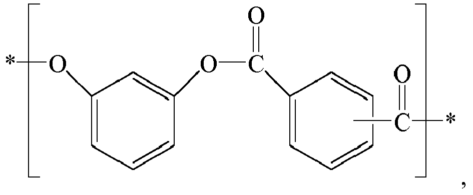 and a polycarbonate block comprising carbonate units having the structure 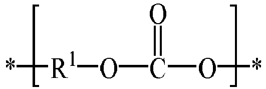 wherein at least 60 percent of the total number of R¹ groups are aromatic divalent groups; wherein the block polyestercarbonate-polysiloxane and the block polyestercarbonate are present in a total amount of greater than 60 weight percent to 99 weight percent, based on the total weight of the composition; and wherein the block polyestercarbonate-polysiloxane contributes 0.3 to 0.7 weight percent of dimethylsiloxane units to the composition, based on the total weight of the composition.

Another embodiment is an article comprising the composition.

Another embodiment is a method of additive manufacturing, the method comprising: melt extruding the composition to form a first molten extrusion; depositing the first molten extrusion in a predetermined pattern to form a first layer comprising an upper surface; further melt extruding the same composition to form a second molten extrusion; and depositing the second molten extrusion in a predetermined pattern to form a second layer comprising a lower surface in contact with the upper surface of the first layer.

These and other embodiments are described in detail below.

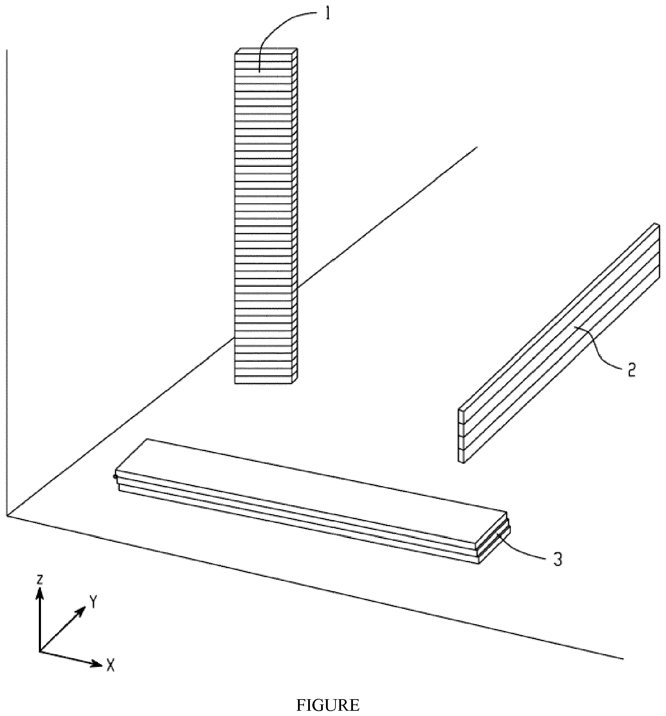

### BRIEF DESCRIPTION OF THE DRAWING

The Figure illustrates print (layer) orientations for exemplary test articles useful for determining tensile properties and Izod impact strengths.

### DETAILED DESCRIPTION OF THE INVENTION

The present inventors have determined that suitability for three-dimensional printing and an improved balance of impact strength and flame retardancy is provided by a composition comprising specific amounts of a block polyestercarbonate-polysiloxane, a core-shell impact modifier, and, optionally, a block polyestercarbonate. The core-shell impact modifier includes a core comprising poly(butyl acrylate) or polydimethylsiloxane or a combination thereof, and a shell comprising poly(methyl methacrylate).

Thus, one embodiment is a composition comprising, based on the total weight of the composition: 20 to 98 weight percent of a block polyestercarbonate-polysiloxane comprising a polyester block comprising resorcinol ester units having the structure 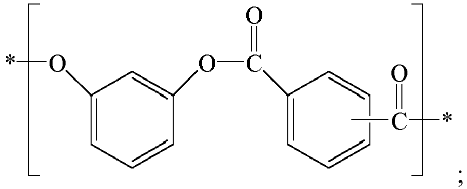 a polycarbonate block comprising carbonate units having the structure 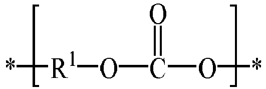 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 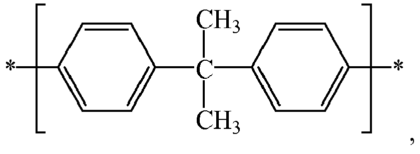 and further comprises, based on the weight of the block polyestercarbonate-polysiloxane, 0.2 to 4 weight percent dimethylsiloxane units; 1 to 8 weight percent of a core-shell impact modifier comprising a shell comprising poly(methyl methacrylate), and a core comprising polydimethylsiloxane, poly(butyl acrylate), or a combination thereof; and 0 to 79 weight percent of a block polyestercarbonate comprising a polyester block comprising resorcinol ester units having the structure 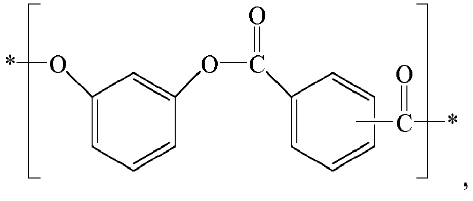 and a polycarbonate block comprising carbonate units having the structure 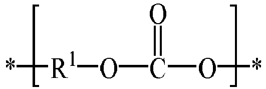 wherein at least 60 percent of the total number of R¹ groups are aromatic divalent groups; wherein the block polyestercarbonate-polysiloxane and the block polyestercarbonate are present in a total amount of greater than 60 weight percent to 99 weight percent, based on the total weight of the composition; and wherein the block polyestercarbonate-polysiloxane contributes 0.3 to 0.7 weight percent of dimethylsiloxane units to the composition, based on the total weight of the composition.

The composition comprises a block polyestercarbonate-polysiloxane. A block polyestercarbonate-polysiloxane is a copolymer comprising at least one polyester block, at least one polycarbonate block, and at least one polysiloxane block. Specifically, the at least one polyester block comprises resorcinol ester units, each resorcinol ester unit having the structure 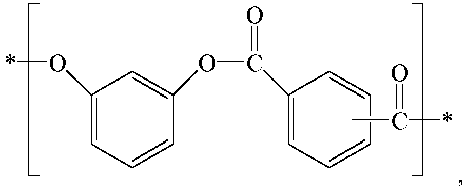 the at least one polycarbonate block comprises carbonate units, each carbonate unit having the structure 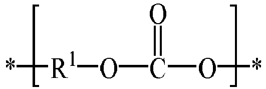 wherein at least 60 percent of the total number of R¹ groups are aromatic divalent groups, and the at least one polysiloxane block comprises dimethylsiloxane units.

In some embodiments, the aromatic divalent groups are C₆-C₂₄ aromatic divalent groups. When not all R¹ groups are aromatic, the remainder are C₂-C₂₄ aliphatic divalent groups. In some embodiments each R¹ is a radical of the formula 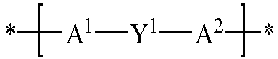 wherein each of A¹ and A² is independently a monocyclic divalent aryl radical, and Y¹ is a bridging radical having one or two atoms that separate A¹ from A². Examples of A¹ and A² include 1,3-phenylene and 1,4-phenylene, each optionally substituted with one, two, or three C₁-C₆ alkyl groups. The bridging radical Y¹ can be a C₁-C₁₂ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In some embodiments, one atom separates A¹ from A². Illustrative examples of Y¹ radicals are -O-, -S-, -S(O)-, -S(O)₂-, -C(O)-, methylene (-CH₂-; also known as methylidene), ethylidene (-CH(CH₃)-), isopropylidene (-C(CH₃)₂-), neopentylidene, cyclohexylidene, cyclopentadecylidene, cyclododecylidene, adamantylidene, cyclohexylidene methylene, cyclohexylmethylene, and 2-[2.2.1]-bicycloheptylidene.

In some embodiments, the resorcinol ester units comprise resorcinol isophthalate/terephthalate units, and the carbonate units comprise resorcinol carbonate units and bisphenol A carbonate units.

The block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene (i.e., the carbonate units are resorcinol carbonate units), and 5 to 35 mole percent of carbonate units wherein R¹ is 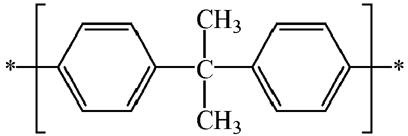 (i.e., the carbonate units are bisphenol A carbonate units). Within the range of 30 to 90 mole percent, the amount of resorcinol ester units can be 50 to 90 mole percent, or 70 to 90 mole percent. Within the range of 5 to 35 mole percent, the amount of resorcinol carbonate units can be 5 to 25 mole percent, or 5 to 15 mole percent. Within the range of 5 to 35 mole percent, the amount of bisphenol A carbonate units can be 5 to 25 mole percent, or 5 to 15 mole percent. The block polyestercarbonate-polysiloxane further comprises, based on the weight of the block polyestercarbonate-polysiloxane, 0.2 to 4 weight percent dimethylsiloxane units. Within this range, the amount of dimethylsiloxane units can be 0.4 to 2 weight percent.

In a very specific embodiment, the block polyestercarbonate-polysiloxane comprises, based on total moles of carbonate and ester units, 70 to 90 mole percent of resorcinol isophthalate/terephthalate units, 5 to 15 mole percent of resorcinol carbonate units, and 5 to 15 mole percent of bisphenol A carbonate units, and further comprises, based on the total weight of the block polyestercarbonate-polysiloxane, 0.2 to 4 weight percent, or 0.4 to 2 weight percent, polydimethylsiloxane.

There is no particular limit on the structure of end groups on the block polyestercarbonate-polysiloxane. An end-capping agent (also referred to as a chain stopping agent or chain terminating agent) can be included during polymerization to provide end groups. Examples of end-capping agents include monocyclic phenols such as phenol, p-cyanophenol, and C₁-C₂₂ alkyl-substituted phenols such as p-cumylphenol, resorcinol monobenzoate, and p-tertiary-butyl phenol; monoethers of diphenols, such as p-methoxyphenol; monoesters of diphenols such as resorcinol monobenzoate; functionalized chlorides of aliphatic monocarboxylic acids such as acryloyl chloride and methacryoyl chloride; and mono-chloroformates such as phenyl chloroformate, alkyl-substituted phenyl chloroformates, p-cumyl phenyl chloroformate, and toluene chloroformate. Combinations of different end groups can be used. In some embodiments, the block polyestercarbonate-polysiloxane has a weight average molecular weight of 15,000 to 55,000 grams/mole, as determined by gel permeation chromatography using polycarbonate standards. Within this range, the weight average molecular weight can be 18,000 to 50,000 grams/mole.

Methods for the preparation of block polyestercarbonate-polysiloxanes are known and described, for example, in U.S. Patent No. 7,790,292 B2 to Colborn et al.

The composition comprises the block polyestercarbonate-polysiloxane in an amount of 20 to 98 weight percent, based on the total weight of the composition. Within this range, the amount of block polyestercarbonate-polysiloxane can be 30 to 80 weight percent, or 40 to 60 weight percent.

The block polyestercarbonate-polysiloxane contributes 0.3 to 0.7 weight percent of dimethylsiloxane units to the composition, based on the total weight of the composition. When the weight percent of dimethylsiloxane units is less than 0.3 weight percent, the flame retardancy of the composition is compromised. And when the weight percent of dimethylsiloxane units is greater than 0.7 weight percent, the composition is less suitable for three-dimensional printing. Within the range of 0.3 to 0.7 weight percent, the amount of dimethylsiloxane units can be 0.4 to 0.6 weight percent.

In addition to the block polyestercarbonate-polysiloxane, the composition comprises a core-shell impact modifier. The core-shell impact modifier comprises a shell comprising poly(methyl methacrylate), and a core comprising polydimethylsiloxane, poly(butyl acrylate), or a combination thereof. In some embodiments, the core-shell impact modifier comprises, based on the weight of the core-shell impact modifier, 5 to 40 weight percent of the shell, and 60 to 95 weight percent of the core. Within the range of 5 to 40 weight percent, the amount of shell can be 7 to 35 weight percent, or 8 to 30 weight percent. Within the range of 60 to 95 weight percent, the amount of core can be 65 to 93 weight percent, or 70 to 92 weight percent.

In some embodiments, the core of the core-shell impact modifier comprises polydimethylsiloxane. In some embodiments, the core of the core-shell impact modifier comprises poly(butyl acrylate). In some embodiments, the core of the core-shell impact modifier comprises a combination of polydimethylsiloxane and poly(butyl acrylate).

In some embodiments, the core of the core-shell impact modifier comprises polydimethylsiloxane. The polydimethylsiloxane can be produced by emulsion copolymerization of monomers comprising a source of dimethylsiloxane units. The source of dimethylsiloxane units can comprise, for example, a cyclic dimethylsiloxane such as 1,3,5,7-octamethylcyclotetrasiloxane (D4), a silicon-containing monomer comprising two hydrolyzable groups, such as dimethyldimethoxysilane, or a combination thereof. The monomers used to form the polydimethylsiloxane can, optionally, include a crosslinking agent, a graftlinking agent, or a combination thereof. The crosslinking agent can comprise a silicon-containing monomer comprising three or more hydrolyzable groups, such as methyltriethoxysilane, tetrapropyloxysilane, or a combination thereof. The graftlinking agent can comprise a silicon-containing monomer comprising at least one hydrolyzable group and a polymerizable carbon-carbon double bond. Examples of graftlinking agents include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof.

In some embodiments, the core of the core-shell impact modifier comprises poly(butyl acrylate). In some embodiments, the core comprises crosslinked poly(butyl acrylate). Crosslinked poly(butyl acrylate) can be prepared by polymerization of butyl acrylate, optionally in the presence of a monomer comprising at least two polymerizable carbon-carbon double bonds. Examples of such monomers include allyl acrylate, allyl methacrylate, ethyleneglycol dimethacrylate, 1,3-butyleneglycol dimethacrylate, divinylbenzene, and combinations thereof.

In some embodiments, the core of the core-shell impact modifier comprises a combination of polydimethylsiloxane and poly(butyl acrylate). In these embodiments, the core can be described as a polydimethylsiloxane-poly(butyl acrylate) composite rubber. The polydimethylsiloxane component of the composite rubber can be formed by reacting a source of dimethylsiloxane units, such as a cyclic dimethylsiloxane such as 1,3,5,7-octamethylcyclotetrasiloxane (D4), a silicon-containing monomer comprising two hydrolyzable groups such as dimethyldimethoxysilane, or a combination thereof. The monomers used to form the polydimethylsiloxane component of the composite rubber can, optionally, further include a crosslinking agent, a graftlinking agent, or a combination thereof. The crosslinking agent can comprise a silicon-containing monomer comprising three or more hydrolyzable groups, such as methyltriethoxysilane, tetrapropyloxysilane, or a combination thereof. The graftlinking agent can comprise a silicon-containing monomer comprising at least one hydrolyzable group and a polymerizable carbon-carbon double bond. Examples of graftlinking agents include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof. The poly(butyl acrylate) component of the composite rubber can be formed by polymerizing butyl acrylate, optionally in the presence of a monomer comprising at least two polymerizable carbon-carbon double bonds, a silicon-containing monomer comprising at least one hydrolyzable group and a polymerizable carbon-carbon double bond, or a combination thereof. Examples of monomers comprising at least two polymerizable carbon-carbon double bonds include allyl acrylate, allyl methacrylate, ethyleneglycol dimethacrylate, 1,3-butyleneglycol dimethacrylate, divinylbenzene, and combinations thereof. Examples of silicon-containing monomers comprising at least one hydrolyzable group and a polymerizable carbon-carbon double bond include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof. In some embodiments, the composite rubber comprises 70 to 95 weight percent polydimethylsiloxane and 5 to 30 weight percent poly(butyl acrylate), based on the weight of the composite rubber.

The shell of the core-shell impact modifier comprises poly(methyl methacrylate). The shell, which is formed in the presence of the core, can be produced by polymerization of methyl methacrylate. The monomers used to form the shell can, optionally, further comprise a monomer comprising at least two polymerizable carbon-carbon double bonds. Examples of such monomers include allyl acrylate, allyl methacrylate, ethyleneglycol dimethacrylate, 1,3-butyleneglycol dimethacrylate, divinylbenzene, and combinations thereof.

Core-shell impact modifiers and methods for their preparation are known and described, for example, in U.S. Patent Nos. 6,153,694 to Miyatake et al. and 9,127,154 B2 to Li et al., and U.S. Patent Application Publication No. US 2008/0242797 A1 of Saegusa et al. Core-shell impact modifiers are also commercially available as, for example, PARALOID™ EXL 2335 impact modifier from The Dow Chemical Company, KANE ACE™ MR-01 impact modifier from Kaneka, and METABLEN™ SX-005 impact modifier from Mitsubishi Chemical.

The composition comprises the core-shell impact modifier in an amount of 1 to 8 weight percent, based on the total weight of the composition. Within this range, the amount of core-shell impact modifier can be 2 to 7 weight percent, or 2 to 6 weight percent, or 1 to 5 weight percent, or 2 to 5 weight percent.

The composition can, optionally, comprise a block polyestercarbonate. It will be understood that the block polyestercarbonate is chemically distinct from the block polyestercarbonate-polysiloxane. Specifically, the block polyestercarbonate-polysiloxane comprises at least one polysiloxane block, while the block polyestercarbonate does not comprise a polysiloxane block. The block polyestercarbonate comprises a polyester block comprising resorcinol ester units having the structure 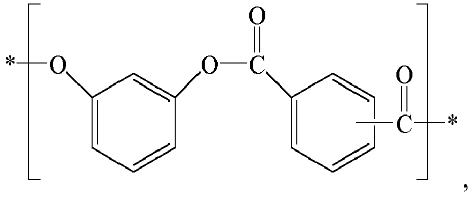 and a polycarbonate block comprising carbonate units having the structure 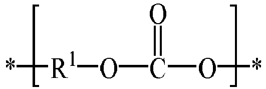 wherein at least 60 mole percent of the total number of R¹ groups are aromatic divalent groups. In some embodiments, the aromatic divalent groups are C₆-C₂₄ aromatic divalent groups. When not all R¹ groups are aromatic, the remainder are C₂-C₂₄ aliphatic divalent groups. In some embodiments, each R¹ is a radical of the formula 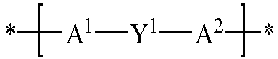 wherein each of A¹ and A² is independently a monocyclic divalent aryl radical and Y¹ is a bridging radical having one or two atoms that separate A¹ from A². In some embodiments, one atom separates A¹ from A². Illustrative non-limiting examples of radicals of this type are -O-, -S-, - S(O)-, -S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a C₁-C₁₂ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. Examples of Y¹ include methylene (-CH₂-; also known as methylidene), ethylidene (-CH(CH₃)-), isopropylidene (-C(CH₃)₂-), and cyclohexylidene.

In some embodiments, the polyester block comprises resorcinol ester units having the structures 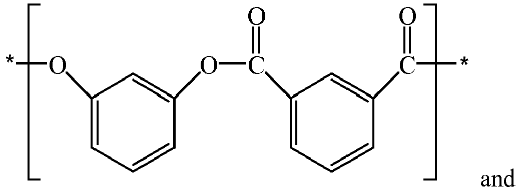 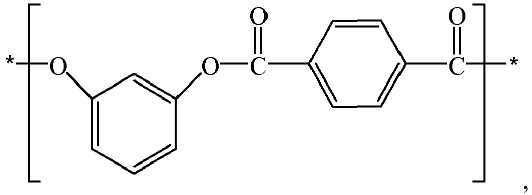 and the polycarbonate block comprises bisphenol A carbonate units having the structure

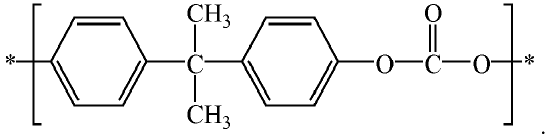

In some embodiments, the block polyestercarbonate comprises, based on total moles of carbonate and ester units, 30 to 90 mole percent of the resorcinol isophthalate/terephthalate units, 5 to 35 mole percent of resorcinol carbonate units, and 5 to 35 mole percent of bisphenol A carbonate units. Within these ranges, the mole percent of resorcinol isophthalate/terephthalate units can be 50 to 90, the mole percent of resorcinol carbonate units can be 5 to 25, and the mole percent of bisphenol A carbonate units can be 5 to 25. In a very specific embodiment, the block polyestercarbonate comprises 70 to 90 mole percent of resorcinol isophthalate/terephthalate units, 5 to 15 mole percent of resorcinol carbonate units, and 5 to 15 mole percent of bisphenol A carbonate units.

In some embodiments, the block polyestercarbonate has a weight average molecular weight of 5,000 to 100,000 grams/mole, as determined by gel permeation chromatography (GPC), using a crosslinked styrene-divinylbenzene column and polycarbonate standards. Within this range, the weight average molecular weight can be 10,000 to 50,000 grams/mole, or 10,000 to 40,000 grams/mole.

Methods of making block polyestercarbonates are known and include those disclosed in U.S. Patent No. 7,790,292 B2 to Colborn et al.

The block polyestercarbonate can be present in the composition in an amount of 0 to 79 weight percent, based on the total weight of the composition. In some embodiments, the block polyestercarbonate amount is 1 to 79 weight percent, or 10 to 60 weight percent, or 20 to 55 weight percent, or 25 to 50 weight percent.

The block polyestercarbonate-polysiloxane and the optional block polyestercarbonate are present in a total amount of greater than 60 weight percent to 99 weight percent, based on the total weight of the composition. Within this range, the total amount of block polyestercarbonate-polysiloxane and optional block polyestercarbonate can be 65 to 95 weight percent, or 75 to 95 weight percent, or 80 to 95 weight percent.

The composition can, optionally, further comprise a flame retardant. A flame retardant is a chemical compound or mixture of chemical compounds capable of improving the flame retardancy of the composition. Suitable flame retardants include, for example, organophosphate esters (including triphenyl phosphate, resorcinol bis(diphenyl phosphate), and bisphenol A bis(diphenyl phosphate)), metal dialkylphosphinates (including aluminum tris(diethylphosphinate), phosphazenes (including hexaphenoxycyclotriphosphazene), melamine-containing flame retardants (including melamine phosphate, melamine pyrophosphate, melamine polyphosphate, and melamine cyanurate), metal hydroxides (including magnesium hydroxide, aluminum hydroxide, and cobalt hydroxide), halogenated polymers (including brominated polycarbonate), and combinations thereof. In this application, block polyestercarbonate-polysiloxane is not considered a flame retardant. When present, the flame retardant can be used in an amount of 0.5 to 20 weight percent, based on the total weight of the composition. Within this range, the flame retardant amount can be 1 to 15 weight percent, or 2 to 12 weight percent. In some embodiments, the composition comprises 5 to 15 weight percent of an organophosphate ester, based on the total weight of the composition. In some embodiments, the composition comprises 1 to 10 weight percent of a brominated polycarbonate, based on the total weight of the composition. Within this range, the brominated polycarbonate amount can be 1 to 9 weight percent, or 2 to 8 weight percent, or 3 to 8 weight percent. In some embodiments, the composition excludes flame retardants.

The composition can, optionally, further comprise one or more additives known in the thermoplastics art. For example, the composition can, optionally, further comprise an additive chosen from stabilizers, lubricants, processing aids, drip retardants, nucleating agents, UV blockers, dyes, pigments, antioxidants, anti-static agents, mineral oil, metal deactivators, antiblocking agents, and combinations thereof. When present, such additives are typically used in a total amount of less than or equal to 10 weight percent, or less than or equal to 5 weight percent, or less than or equal to 2 weight percent, or less than or equal to 1 weight percent, based on the total weight of the thermoplastic material.

In some embodiments, the composition excludes one of, or at least two of, or all of polycarbonates (including polycarbonate homopolymers, as well as polycarbonate copolymers in which each unit comprises a carbonate linkage), polyesters (including polyester homopolymers, as well as polyester copolymers in which each unit comprises an ester linkage), polyestercarbonates comprising ester units comprising a divalent aliphatic group, styrene-acrylonitrile copolymers, and acrylonitrile-butadiene-styrene terpolymers. It will be understood that these optionally excluded polymers are chemically distinct from block polyestercarbonate-polysiloxanes and block polyestercarbonates.

In some embodiments, the composition minimizes or excludes halogens. For example, the composition can comprise 0 to 1 weight percent of halogens, or the composition can comprise 0 to 0.1 weight percent of halogens, or the composition can exclude halogens.

In some embodiments, the composition comprises 0 to 2 weight percent, based on the total weight of the composition, of the organophosphorus compound described in US20140370213 A1 of van der Mee et al. Within this limit, the amount of organophosphorus compound can be 0 to 1 weight percent, or 0 weight percent.

In some embodiments, the composition comprises 0 to less than 1 weight percent of elemental phosphorus, based on the total weight of the composition. Within this limit, the amount of phosphorus can be 0 to 0.1 weight percent, or 0 to 0.05 weight percent, or 0 weight percent.

In a very specific embodiment, the composition comprises 40 to 60 weight percent of the block polyestercarbonate-polysiloxane, 1 to 5 weight percent of the core-shell impact modifier, and 40 to 60 weight percent of the block polyestercarbonate; and the core of the core-shell impact modifier comprises polydimethylsiloxane or poly(butyl acrylate).

In a very specific embodiment, the composition comprises 40 to 60 weight percent of the block polyestercarbonate-polysiloxane, 1 to 5 weight percent of the core-shell impact modifier, 35 to 55 weight percent of the block polyestercarbonate; and the composition further comprises 1 to 10 weight percent of a brominated polycarbonate; and the core of the core-shell impact modifier comprises poly(butyl acrylate).

In addition to the composition, another embodiment is an article comprising the composition in any of its above-described variations. There is no particular limit on the form of the article, or the process by which it is prepared. In some embodiments, the article is an injection molded article. In some embodiments, the article is a filament having a diameter of 1 to 5 millimeters, or 1 to 3 millimeters. In some embodiments, the article comprises at least two contiguous layers, the at least two contiguous layers each comprising the same composition. Such an article can be prepared by additive manufacturing.

Another embodiment is a method of additive manufacturing, the method comprising: melt extruding the composition in any of its above-described variations to form a first molten extrusion; depositing the first molten extrusion in a predetermined pattern to form a first layer comprising an upper surface; further melt extruding the same composition to form a second molten extrusion; and depositing the second molten extrusion in a predetermined pattern to form a second layer comprising a lower surface in contact with the upper surface of the first layer.

In some embodiments of the method, the composition comprises 40 to 60 weight percent of the block polyestercarbonate-polysiloxane, 1 to 5 weight percent of the core-shell impact modifier, and 40 to 60 weight percent of the block polyestercarbonate. In some embodiments, the core of the core-shell impact modifier comprises polydimethylsiloxane. In some embodiments, the core of the core-shell impact modifier comprises poly(butyl acrylate). In some embodiments, the core of the core-shell impact modifier comprises polydimethylsiloxane and poly(butyl acrylate).

In some embodiments of the method, the composition comprises 40 to 60 weight percent of the block polyestercarbonate-polysiloxane, 1 to 5 weight percent of the core-shell impact modifier, and 35 to 55 weight percent of the block polyestercarbonate; the composition further comprises 1 to 10 weight percent of a brominated polycarbonate; and the core of the core-shell impact modifier comprises poly(butyl acrylate).

The invention includes at least the following embodiments.

Embodiment 1: A composition comprising, based on the total weight of the composition: 20 to 98 weight percent of a block polyestercarbonate-polysiloxane comprising a polyester block comprising resorcinol ester units having the structure 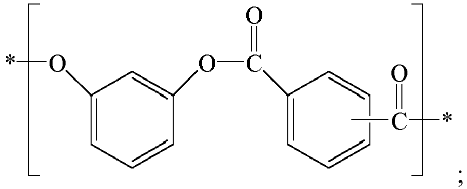 a polycarbonate block comprising carbonate units having the structure 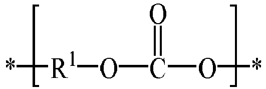 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 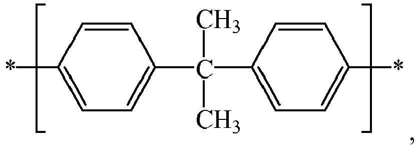 and further comprises, based on the weight of the block polyestercarbonate-polysiloxane, 0.2 to 4 weight percent dimethylsiloxane units; 1 to 8 weight percent of a core-shell impact modifier comprising a shell comprising poly(methyl methacrylate), and a core comprising polydimethylsiloxane, poly(butyl acrylate), or a combination thereof; and 0 to 79 weight percent of a block polyestercarbonate comprising a polyester block comprising resorcinol ester units having the structure 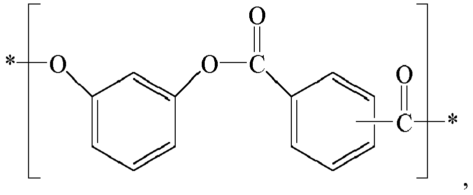 and a polycarbonate block comprising carbonate units having the structure 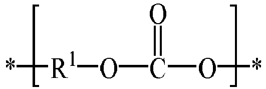 wherein at least 60 percent of the total number of R¹ groups are aromatic divalent groups; wherein the block polyestercarbonate-polysiloxane and the block polyestercarbonate are present in a total amount of greater than 60 weight percent to 99 weight percent, based on the total weight of the composition; and wherein the block polyestercarbonate-polysiloxane contributes 0.3 to 0.7 weight percent of dimethylsiloxane units to the composition, based on the total weight of the composition.

Embodiment 2: The composition of embodiment 1, comprising 1 to 79 weight percent of the block polyestercarbonate.

Embodiment 3: The composition of embodiment 1 or 2, further comprising 1 to 10 weight percent of a brominated polycarbonate.

Embodiment 4: The composition of any one of embodiments 1-3, wherein the core of the core-shell impact modifier comprises poly(butyl acrylate).

Embodiment 5: The composition of any one of embodiments 1-3, wherein the core of the core-shell impact modifier comprises polydimethylsiloxane.

Embodiment 6: The composition of any one of embodiments 1-3, wherein the core of the core-shell impact modifier comprises a combination of polydimethylsiloxane and poly(butyl acrylate).

Embodiment 7: The composition of embodiment 1, comprising 40 to 58 weight percent of the block polyestercarbonate-polysiloxane, 1 to 5 weight percent of the core-shell impact modifier, and 40 to 58 weight percent of the block polyestercarbonate.

Embodiment 8: The composition of embodiment 1, wherein the composition comprises 40 to 62 weight percent of the block polyestercarbonate-polysiloxane, 1 to 5 weight percent of the core-shell impact modifier, 35 to 55 weight percent of the block polyestercarbonate; and wherein the composition further comprises 1 to 10 weight percent of a brominated polycarbonate.

Embodiment 8a: The composition of embodiment 8, wherein the core of the core-shell impact modifier comprises poly(butyl acrylate).

Embodiment 8b: The composition of embodiment 8, wherein the core of the core-shell impact modifier comprises polydimethylsiloxane.

Embodiment 8c: The composition of embodiment 8, wherein the core of the core-shell impact modifier comprises a combination of polydimethylsiloxane and poly(butyl acrylate).

Embodiment 9: An article comprising the composition of any one of embodiments 1-8, 8a, 8b, and 8c.

Embodiment 10: The article of embodiment 9, wherein the article is an injection molded article.

Embodiment 11: The article of embodiment 9, wherein the article is a filament having a diameter of 1 to 5 millimeters.

Embodiment 12: The article of embodiment 9, wherein the article comprises at least two contiguous layers, the at least two contiguous layers each comprising the same composition.

Embodiment 13: A method of additive manufacturing, the method comprising: melt extruding the composition of any one of embodiments 1-8, 8a, 8b, and 8c to form a first molten extrusion; depositing the first molten extrusion in a predetermined pattern to form a first layer comprising an upper surface; further melt extruding the same composition to form a second molten extrusion; and depositing the second molten extrusion in a predetermined pattern to form a second layer comprising a lower surface in contact with the upper surface of the first layer.

Embodiment 14: The method of embodiment 13, wherein the composition comprises 40 to 58 weight percent of the block polyestercarbonate-polysiloxane, 1 to 5 weight percent of the core-shell impact modifier, and 40 to 58 weight percent of the block polyestercarbonate.

Embodiment 15: The method of embodiment 13, wherein the composition comprises 40 to 62 weight percent of the block polyestercarbonate-polysiloxane, 1 to 5 weight percent of the core-shell impact modifier, 35 to 55 weight percent of the block polyestercarbonate; wherein the composition further comprises 1 to 10 weight percent of a brominated polycarbonate.

Embodiment 15a: The method of embodiment 15, wherein the core of the core-shell impact modifier comprises poly(butyl acrylate).

Embodiment 15b: The method of embodiment 15, wherein the core of the core-shell impact modifier comprises polydimethylsiloxane.

Embodiment 15c: The method of embodiment 15, wherein the core of the core-shell impact modifier comprises a combination of polydimethylsiloxane and poly(butyl acrylate).

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples. EXAMPLES 1-10, COMPARATIVE EXAMPLES 1-11

Components used to prepare compositions are summarized in Table 1.

**Table 1**

| Component | Description |
|---|---|
| PEC-Si | para-Cumylphenol endcapped block polyestercarbonate-polysiloxane with about 99 weight percent total of polyester blocks and polycarbonate blocks, and about 1 weight percent polysiloxane blocks; the polyestercarbonate portion contains about 82 mole percent 1,3-phenylene isophthalate-*co*-terephthalate units, about 9 mole percent resorcinol carbonate units, and about 9 mole percent bisphenol A carbonate units; the polysiloxane blocks have, on average, about 10 dimethylsiloxane units per block; the polyestercarbonate-polysiloxane has a weight average molecular weight of about 24,500 grams/mole and is preparable by the procedure of Example 2-14 of Method 2 as described in US Patent No. 7,790,292 B2 to Colburn et al., except that the p-cumylphenol level was adjusted to achieve a weight average molecular weight of about 24,500 grams/mole. |
| PEC | para-Cumylphenol endcapped block polyestercarbonate with polyester blocks containing 1,3-phenylene isophthalate-*co*-terephthalate units, and carbonate blocks containing bisphenol A carbonate and resorcinol carbonate units; the copolymer has about 82 mole percent resorcinol ester (50:50 isophthalate/terephthalate) units, about 9 mole percent resorcinol carbonate units, and about 9 mole percent bisphenol A carbonate units; it has a weight average molecular weight of about 20,000 grams/mole, and is preparable by the procedure of Comparative Example 2-4 of U.S. Patent No. 7,790,292 B2 to Colborn. |
| CSIM 1 | Core-shell impact modifier having a core comprising crosslinked poly(butyl acrylate) and a shell comprising grafted poly(methyl methacrylate); obtained from The Dow Chemical Company as PARALOID™ EXL 2335 impact modifier. |
| CSIM 2 | Core-shell impact modifier having about 75-83 weight percent of a core comprising crosslinked polydimethylsiloxane and about 17-25 weight percent of a shell comprising grafted poly(methyl methacrylate); obtained in powder form from Kaneka as KANE ACE™ MR-01 impact modifier. |
| CSIM 3 | Core-shell impact modifier having a core comprising silicone-acrylic-based rubber and a shell comprising grafted poly(methyl methacrylate); obtained in powder form from Mitsubishi Chemical as METABLEN™ SX-005 impact modifier. |
| BrPC | Brominated polycarbonate, prepared by copolymerization of phosgene and a 50:50 weight/weight mixture of 2,2',6,6'-tetrabromo-4,4'-isopropylidenediphenol and bisphenol A, and having a weight average molecular weight of about 22,500 grams/mole; preparable according to the method for forming "TBBPA-BPA Copolymer" in columns 26-27 of U.S. Patent No. 9,006,324 to Sybert et al. |
| BPADP | Bisphenol A bis(diphenyl phosphate), CAS Reg. No. 5945-33-5; obtained as FP-600 ADK Stabilizer from Amfine Chemical Corporation |
| OPE | Oligomeric phosphate ester flame retardant; obtained in powder form as FYROLFLEX™ SOL-DP flame retardant from ICL Industrial Products. |
| TBPDP | Tetrakis(2,4-di-tert-butylphenyl)4,4'-biphenyldiphosphonite, CAS Reg. No. 119345-01-6; obtained as IRGAFOS™ P-EPQ from BASF. |
| TiO₂ | Titanium dioxide, CAS Reg. No. 13463-67-7, polysiloxane coated; obtained as KRONOS™ 2233 titanium dioxide from Kronos, Inc. |
| SB1 104 | Solvent Blue 104, CAS Reg. No. 116-75-6; obtained as SANDOPLAST™ Blue 2B from Clariant. |
| SR 52 | Solvent Red 52, CAS Reg. No. 81-39-0; obtained as MACROLEX™ Red 5B from Lanxess. |

Compositions are summarized in Table 2, where component amounts are expressed in weight percent based on the total weight of the composition.

Compositions were compounded on a 25 millimeter Werner-Pfleiderer ZAK twin-screw extruder having a length to diameter ratio of 33:1 and a vacuum port located upstream of the die face, and operating at barrel temperatures of 280-295 °C / 280-295 °C / 285-300 °C / 290-305 °C / 295-310 °C / 300-315 °C / 305-320 °C from feed throat to die, a die temperature of 305-320 °C, and a throughput of 15-25 kilograms/hour. All components were added at the feed throat. The extrudate was cooled in a water bath, then pelletized. Pellets were dried in a vacuum oven at 135 °C for at least 4 hours before use.

Table 2 presents melt volume flow rate (MVR) values, melt flow rate (MFR) values, and glass transition temperature (T_{g}) values for the experimental compositions. MVR values, expressed in cubic centimeters per 10 minutes, and MFR values, expressed in grams per 10 minutes, were determined according to ASTM D1238-13 at a temperature of 300 °C and a load of 3.12 kilograms. Glass transition temperature values were determined by differential scanning calorimetry using a temperature range of 40 to 250 °C and a heating rate of 20 °C/minute.

Test articles for flammability testing and physical property determination were prepared by both injection molding and additive manufacturing. Injection molding utilized a Sumitomo 180-ton DEMAG™ molding machine operating at a barrel temperature of 300-330 °C, a mold temperature of 110-140 °C, a screw speed of 40-70 rotations per minute, a back pressure of 0.3-0.7 megapascals, and a shot to cylinder size of 40-60%. All injection molded test articles were conditioned at 23 °C and 50% relative humidity for at least one day before testing.

Additive manufacturing was used to directly print tensile bars having dimensions according to ASTM D638-14, Izod bars having dimensions according to ASTM D256-10e1, flame bars having a thickness of 1.5 millimeters, square plaques having an edge length of 15.0 centimeters (5.9 inches) and a thickness of 1.5 millimeters, and plaques having edge lengths of 15.24 centimeters and 7.26 centimeters and a thickness of 1.5 millimeters (6 inches by 3 inches by 1.5 millimeters). For preparation of test articles by additive manufacturing, pellets were extruded into monofilaments about 1.79 millimeters in diameter. For Comparative Example 1, a polycarbonate monofilament of similar diameter was obtained from Stratasys, Ltd. as PC (polycarbonate) filament. The spooled filaments were dried to less than 0.04 weight percent moisture before use for fused filament fabrication in a Stratasys FORTUS 400mc under standard polycarbonate conditions with a nozzle/print head temperature of 345 °C and a chamber temperature of 145 °C using a tip size of 0.010 inch (T16; 0.254 millimeters), a layer thickness (resolution) of 0.254 millimeters (0.010 inch), a contour and raster width of 0.508 millimeters (0.020 inch), a precision of the greater of +/- 0.127 millimeters (+/- 0.005 inch) or +/- 0.0015 millimeter/millimeter (+/- 0.0015 inch/inch), and an air gap of 0.0000 millimeter (0.0000 inch). Test parts were directly printed (rather than being cut from a larger object) by printing alternating layers in 45/-45 degree criss-cross orientations. In this configuration, strands of extrudate were laid in a diagonal pattern with each layer crossing over at a 90 degree angle from the previous layer. The Figure illustrates different sample orientations for test articles. The orientations are named relative to the Z-direction (i.e., the axis along which material is deposited by the printer): the orientation labeled 1 has an XZ or "upright" orientation; the orientation labeled 2 has a YZ or "on-edge" orientation and; and the orientation labeled 3 has an XY or "flat" orientation. In Table 2, the "Printability" of each composition is summarized as having one of three ratings: "++" means that the composition printed well and the printed parts exhibited no defects; "+" means that the composition could be printed, but some printed parts exhibited defects; "O" means that the composition could not be printed or the printed parts exhibited extreme defects, or both.

In the United States, Federal Aviation Regulation (FAR) Part 25.853 sets forth the airworthiness standards for aircraft compartment interiors. The safety standards for aircraft and transportation systems used in the United States include a smoke density test specified in FAR 25.5 Appendix F, Part V, Amendment 25-116. Flammability requirements include the heat release rate standard (referred to as the FAA 65/65 standard) described in FAR Section 25, Appendix F, Part IV, and the sixty second vertical burn test specified in FAR 25.853(a) Appendix F, Part I, (a),1,(i). The testing was conducted by Herb Curry, Inc., Mount Vernon, Indiana, USA. Heat release rate testing was conducted on three samples per composition. To pass the test, each sample must exhibit an average Two Minute Integrated Heat Release Rate of 65 kilowatt-minute/meter² (kW-min/m²) or less, and an average Peak Heat Release of 65 kilowatt/meter² (kW/m²) or less. Because of the variability in the test and the effect of applied coatings, paints and/or glues, most equipment manufacturers prefer or require materials exhibit an average Two Minute Integrated Heat Release Rate of 55 kW-min/m² or less, and an average Peak Heat Release of 55 kW/m² or less to ensure that the final assembly consistently complies with the FAA 65/65 standard. Heat release rate results are presented in Table 2.

Tensile modulus values (expressed in units of megapascals), tensile strength at break (expressed in units of megapascals), and tensile elongation (expressed in units of percent)were determined at 23 °C according to ASTM D638-14. Notched Izod impact strength values, expressed in units of joules/meter, were determined according to ASTM D256-10e1.

The results in Table 2 show that compositions according to the present invention exhibit a combination of good printability (i.e., a printability rating of "+" or "++"), low heat release as highlighted by the FAA testing (i.e., an average Two Minute Integrated Heat Release Rate of 55 kW-min/m² or less, and an average Peak Heat Release of 55 kW/m² or less), and impact strength (i.e., a notched Izod impact strength for additively manufactured articles in the flat orientation of at least 168 joules/meter). Comparative compositions in which the block polyestercarbonate-polysiloxane was absent or contributed less than 0.3 weight percent of dimethylsiloxane units to the composition sometimes exhibited compromised flame retardancy (see, e.g., Comparative Example 11, which lacked block polyestercarbonate-polysiloxane and exhibited, for additively manufactured test articles in the flat orientation, a Two Minute Integrated Heat Release Rate of 78.3 kW-min/m² and a Peak Heat Release of 82.0 kW/m²). And comparative compositions in which the block polyestercarbonate-polysiloxane contributed more than 0.7 weight percent of dimethylsiloxane units to the composition sometimes exhibited compromised printability (see, e.g., Comparative Example 4, in which the block polyestercarbonate-polysiloxane contributed 0.9694 weight percent of dimethylsiloxane units to the composition, and which exhibited a printability rating of "O").

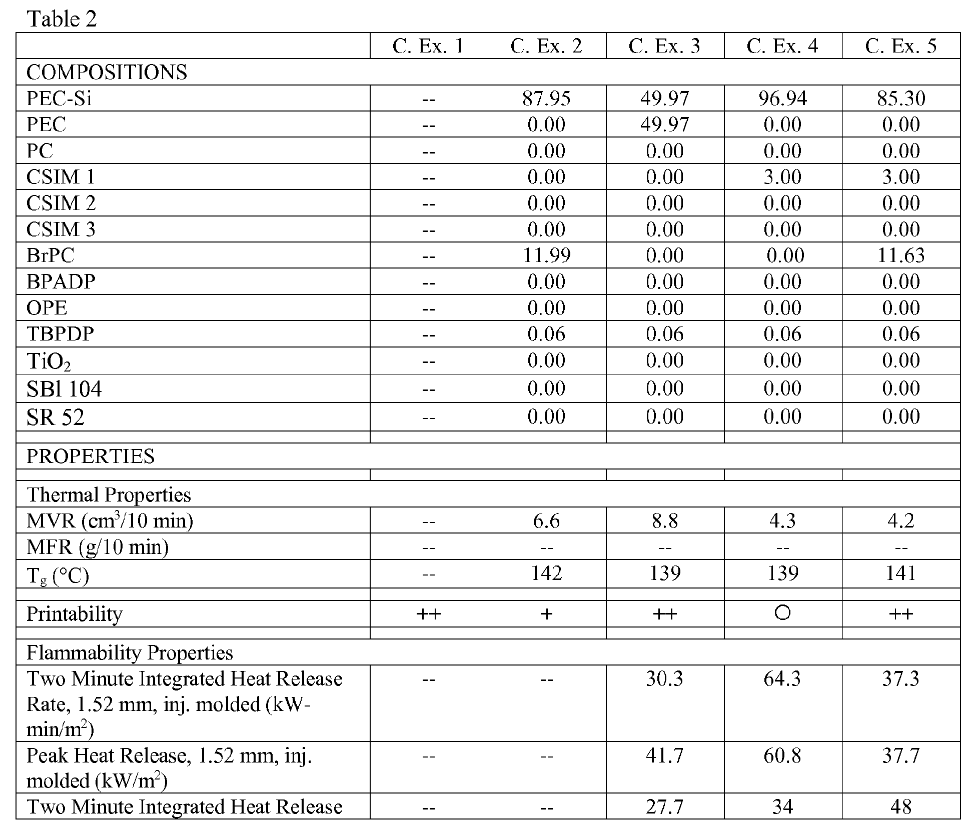

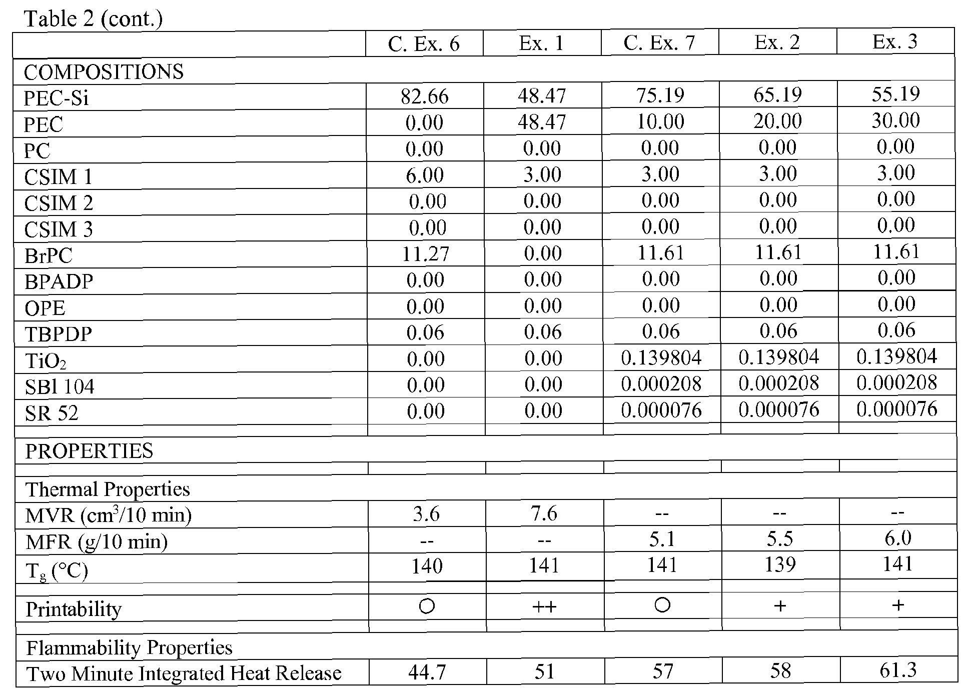

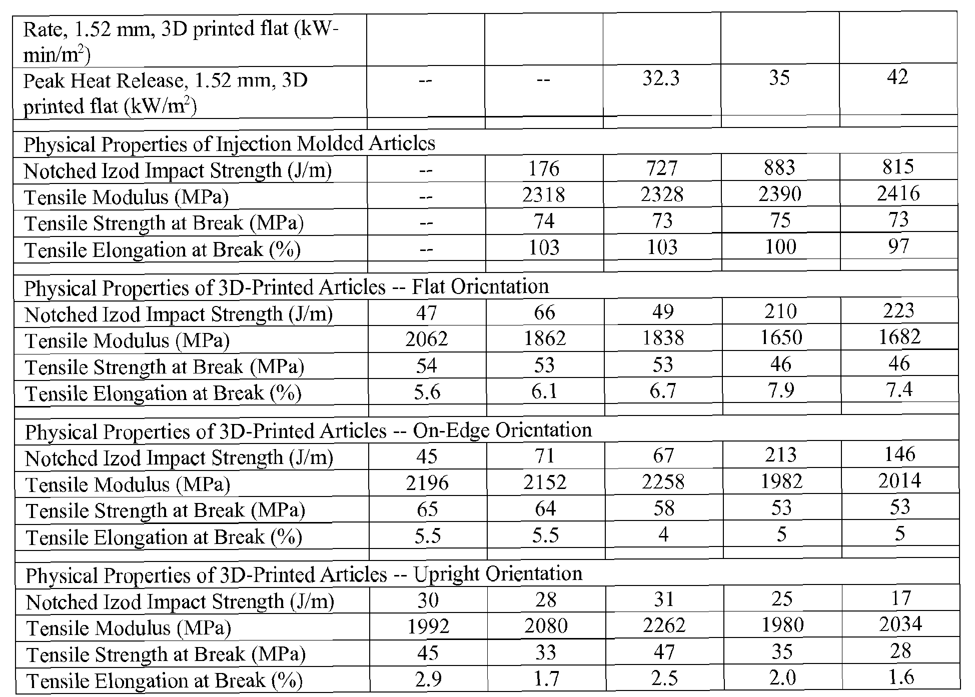

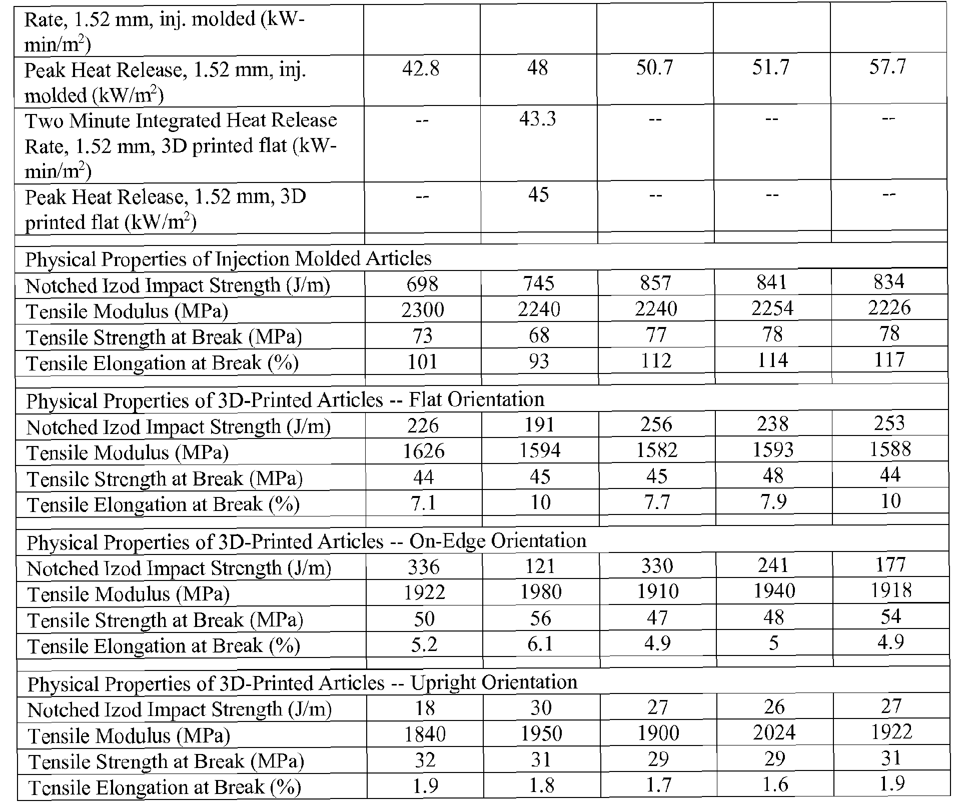

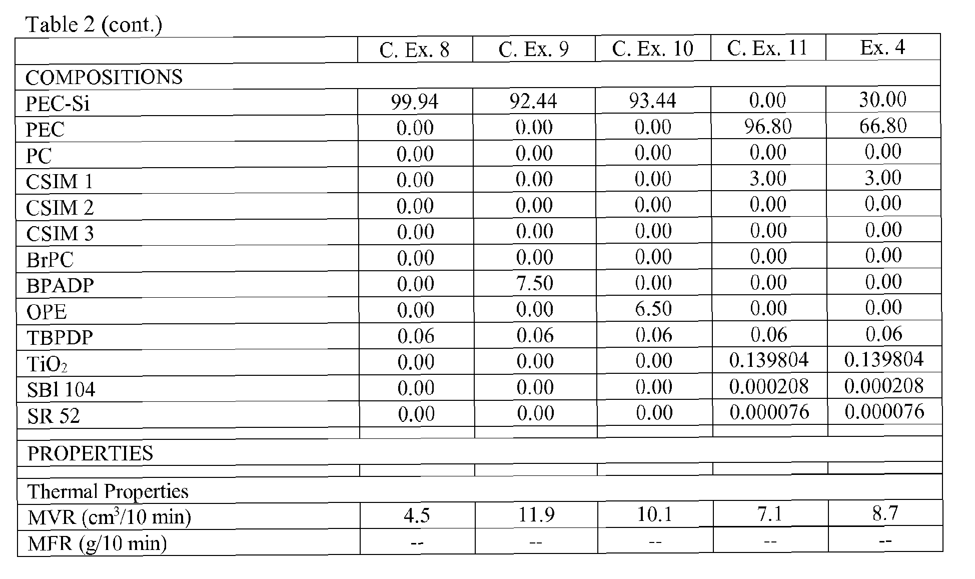

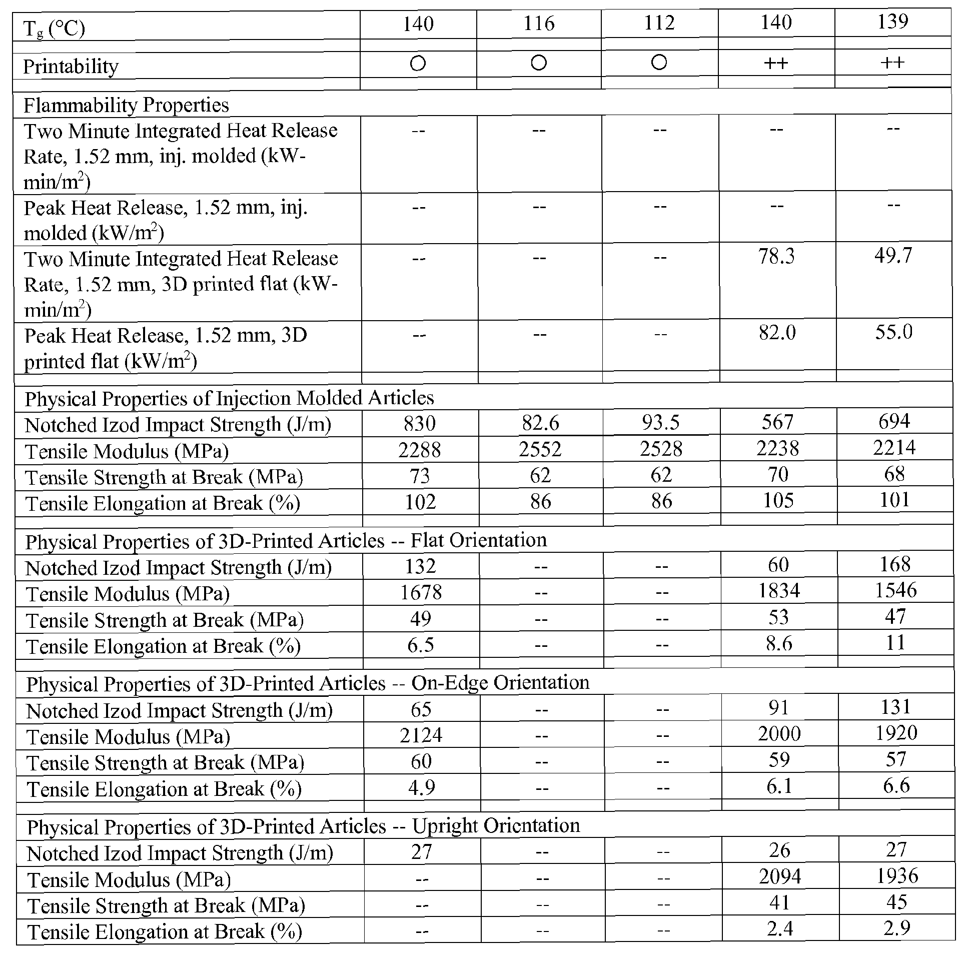

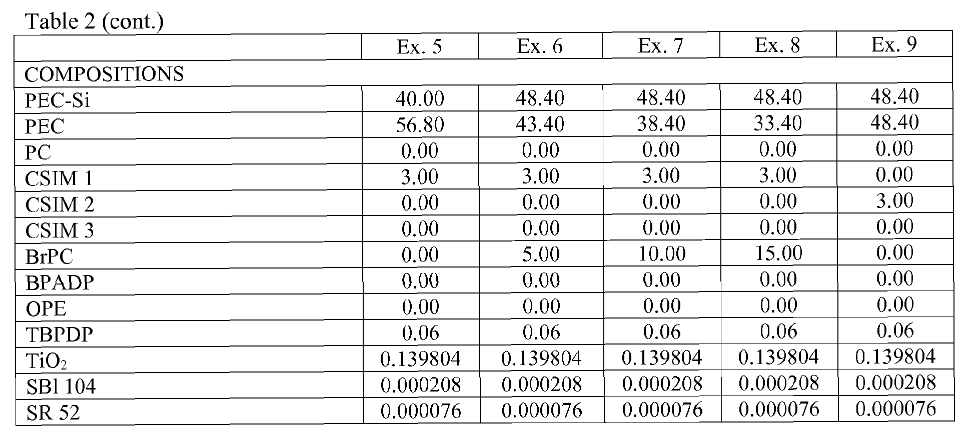

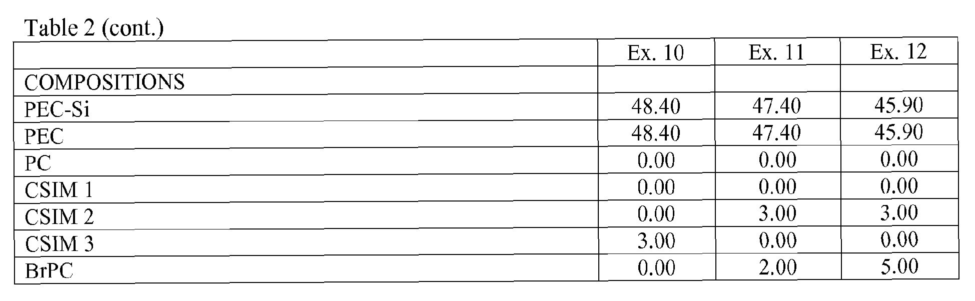

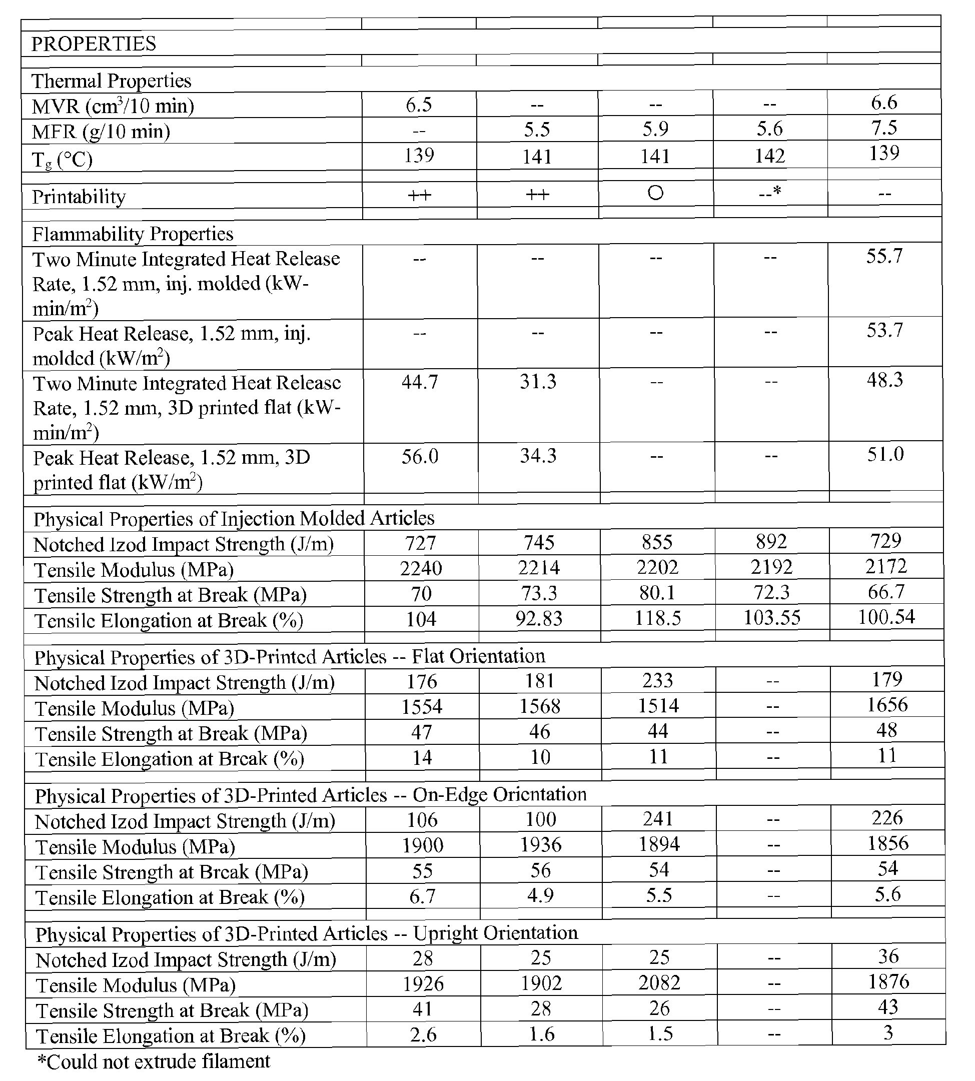

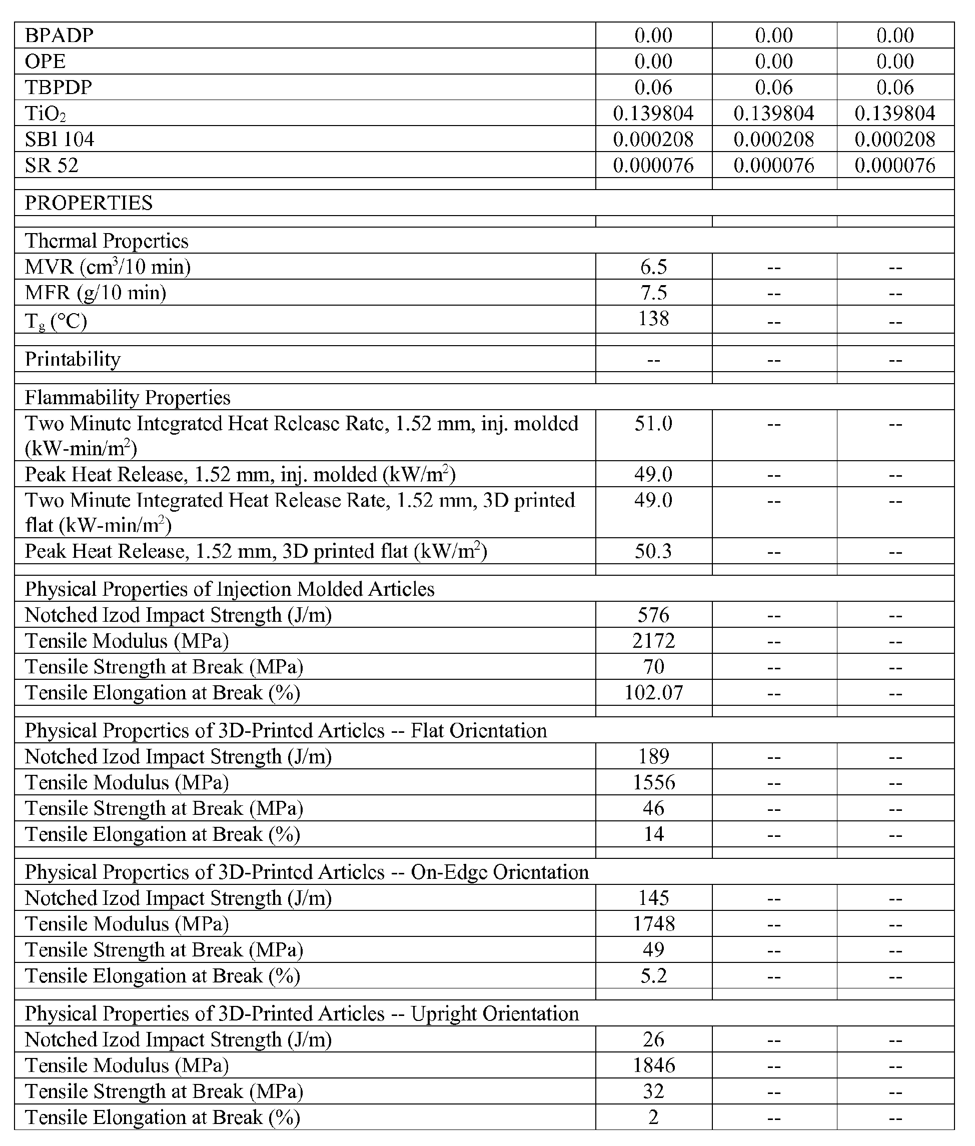

Table 3 presents results of the sixty second vertical burn testing. Testing was conducted on three samples per test condition, and test results are reported as an average plus or minus a standard deviation ("avg. ± std. dev."). Each test condition was defined by three variables: first, the composition, corresponding to Example number 1, 6, 9, or 10; second, whether the test sample was prepared by injection molding or three-dimensional printing in the flat orientation; third, whether the test sample was wet or dry. Test articles had a length of 20.32 to 30.48 centimeters (8 to 12 inches), a width of 7.62 centimeters (3 inches), and a thickness of 1.52 millimeters (0.060 inch). Test articles prepared by injection molding used equipment and conditions as described above in the context of test articles for flammability testing and physical property determination. Similarly, test articles prepared by three-dimensional printing in the flat orientation used equipment and conditions as described above in the context of test articles for flammability testing and physical property determination. Prior to testing, test articles described as "wet" were conditioned at 70 °F (21 °C) and 50% relative humidity for 24 hours minimum, and those described as "dry" were dried in an oven for 8-12 hours at 104 °C. To achieve a rating of "pass," a test condition needed to exhibit an average burning time less than or equal to 15 seconds, an average burning length less than or equal to 15.2 centimeters (6 inches), and an average longest particle burning time less than or equal to 3 seconds. Conversely, test conditions not meeting these requirements were given a "fail" rating.

The Table 3 results for sixty second vertical burn testing show (1) the Example 9 composition in the dry condition passed the test for both injection molded and three-dimensional printed test articles; (2) the Example 9 composition in the wet condition passed the test for both injection molded and three-dimensional printed test articles; (3) the Example 10 composition in the dry condition failed the test for three-dimensional printed test articles, but passed the test for injection molded test articles, albeit with a barely acceptable average burning time of 14.3 seconds and a large average burning time standard deviation of 24.8 seconds; (4) the Example 10 composition in the wet condition failed the test for three-dimensional printed test articles, but passed the test for injection molded test articles.

**Table 3**

| | Ex. 1 | Ex. 6 | Ex. 9 | Ex. 10 |
|---|---|---|---|---|
| INJECTION MOLDED, DRY | | | | |
| Burning time, avg. ± std. dev. (sec) | -- | 1.0 ± 1.0 | 2.0 ± 2.0 | 14.3 ± 24.8 |
| Burning length, avg. ± std. dev. (mm) | -- | 81 ± 8 | 76 ± 5 | 81 ± 10 |
| Longest particle burning time, avg. ± std. dev. (sec) | -- | 0 ± 0 | 2.3 ± 0.6 | 2.3 ± 0.6 |
| Pass or Fail | -- | pass | pass | pass |

| 3D PRINTED FLAT, DRY | | | | |
|---|---|---|---|---|
| Burning time, avg. ± std. dev. (sec) | 39.7 ± 25.7 | 0 ± 0 | 7.0 ± 3.6 | 20.3 ± 21.5 |
| Burning length, avg. ± std. dev. (mm) | 94 ± 30 | 43 ± 5 | 61 ± 3 | 69 ± 15 |
| Longest particle burning time, avg. ± std. dev. (sec) | 3.3 ± 0.6 | 1.3 ± 1.2 | 3.0 ± 1.0 | 4.3 ± 0.6 |
| Pass or Fail | fail | pass | pass | fail |

| INJECTION MOLDED, WET | | | | |
|---|---|---|---|---|
| Burning time, avg. ± std. dev. (sec) | -- | -- | 3.7 ± 3.2 | 5.0 ± 5.6 |
| Burning length, avg. ± std. dev. (mm) | -- | -- | 97 ± 5 | 94 ± 15 |
| Longest particle burning time, avg. ± std. dev. (sec) | -- | -- | 0 ± 0 | 1.7 ± 1.5 |
| Pass or Fail | -- | -- | pass | pass |

| 3D PRINTED FLAT, WET | | | | |
|---|---|---|---|---|
| Burning time, avg. ± std. dev. (sec) | 16.0 ± 15.6 | 2.0 ± 1.7 | 3.3 ± 0.5 | 51.7 ± 15.7 |
| Burning length, avg. ± std. dev. (mm) | 66 ± 18 | 58 ± 5 | 58 ± 3 | 74 ± 13 |
| Longest particle burning time, avg. ± std. dev. (sec) | 2.7 ± 0.6 | 1.7 ± 1.5 | 0 ± 0 | 3.3 ± 0.6 |
| Pass or Fail | fail | pass | pass | fail |

## Claims

1. A composition comprising, based on the total weight of the composition:
20 to 98 weight percent of a block polyestercarbonate-polysiloxane comprising a polyester block comprising resorcinol ester units having the structure 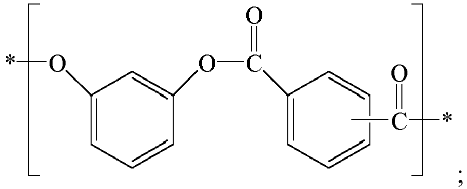 a polycarbonate block comprising carbonate units having the structure 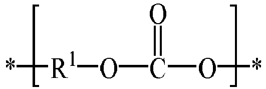 wherein at least 60 percent of the total number of R¹ groups are aromatic divalent groups; and a polysiloxane block comprising dimethylsiloxane units; wherein the block polyestercarbonate-polysiloxane comprises, based on total moles of carbonate and ester units, 30 to 90 mole percent of the resorcinol ester units, 5 to 35 mole percent of carbonate units wherein R¹ is 1,3-phenylene, and 5 to 35 mole percent of carbonate units wherein R¹ is 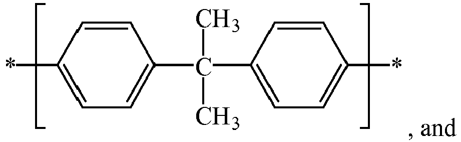 further comprises, based on the weight of the block polyestercarbonate-polysiloxane, 0.2 to 4 weight percent dimethylsiloxane units;
1 to 8 weight percent of a core-shell impact modifier comprising a shell comprising poly(methyl methacrylate), and a core comprising polydimethylsiloxane, poly(butyl acrylate), or a combination thereof; and
0 to 79 weight percent of a block polyestercarbonate comprising a polyester block comprising resorcinol ester units having the structure 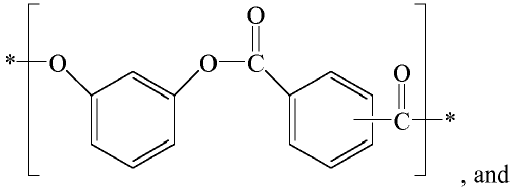 a polycarbonate block comprising carbonate units having the structure 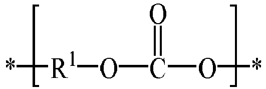 wherein at least 60 percent of the total number of R¹ groups are aromatic divalent groups;
wherein the block polyestercarbonate-polysiloxane and the block polyestercarbonate are present in a total amount of greater than 60 weight percent to 99 weight percent, based on the total weight of the composition; and
wherein the block polyestercarbonate-polysiloxane contributes 0.3 to 0.7 weight percent of dimethylsiloxane units to the composition, based on the total weight of the composition.

2. The composition of claim 1, comprising 1 to 79 weight percent of the block polyestercarbonate.

3. The composition of claim 1 or 2, further comprising 1 to 10 weight percent of a brominated polycarbonate.

4. The composition of any one of claims 1-3, wherein the core of the core-shell impact modifier comprises poly(butyl acrylate).

5. The composition of any one of claims 1-3, wherein the core of the core-shell impact modifier comprises polydimethylsiloxane.

6. The composition of any one of claims 1-3, wherein the core of the core-shell impact modifier comprises a combination of polydimethylsiloxane and poly(butyl acrylate).

7. The composition of claim 1, comprising
40 to 58 weight percent of the block polyestercarbonate-polysiloxane,
1 to 5 weight percent of the core-shell impact modifier, and
40 to 58 weight percent of the block polyestercarbonate.

8. The composition of claim 1,
wherein the composition comprises
40 to 62 weight percent of the block polyestercarbonate-polysiloxane,
1 to 5 weight percent of the core-shell impact modifier,
35 to 55 weight percent of the block polyestercarbonate; and
wherein the composition further comprises 1 to 10 weight percent of a brominated polycarbonate.

9. An article comprising the composition of any one of claims 1-8.

10. The article of claim 9, wherein the article is an injection molded article.

11. The article of claim 9, wherein the article is a filament having a diameter of 1 to 5 millimeters.

12. The article of claim 9, wherein the article comprises at least two contiguous layers, the at least two contiguous layers each comprising the same composition.

13. A method of additive manufacturing, the method comprising:
melt extruding the composition of any one of claims 1-8 to form a first molten extrusion;
depositing the first molten extrusion in a predetermined pattern to form a first layer comprising an upper surface;
further melt extruding the same composition to form a second molten extrusion; and
depositing the second molten extrusion in a predetermined pattern to form a second layer comprising a lower surface in contact with the upper surface of the first layer.

14. The method of claim 13, wherein the composition comprises
40 to 58 weight percent of the block polyestercarbonate-polysiloxane,
1 to 5 weight percent of the core-shell impact modifier, and
40 to 58 weight percent of the block polyestercarbonate.

15. The method of claim 13,
wherein the composition comprises
40 to 62 weight percent of the block polyestercarbonate-polysiloxane,
1 to 5 weight percent of the core-shell impact modifier,
35 to 55 weight percent of the block polyestercarbonate; and
wherein the composition further comprises 1 to 10 weight percent of a brominated polycarbonate.
